# EUROPEAN PATENT APPLICATION

(11) **EP 1 035 486 A2**
(43) Date of publication of application: **13.09.2000**
(21) Application number: 00301833.0
(22) Date of filing: 06.03.2000
(51) Int. Cl.: G06F 17/60

(54) **Research method utilizing computer communication**

(30) Priority: 09.03.1999 KR 9907834
(71) Applicant: Seoung, Il Kang, Kwangjin-Gu, Seoul 143-203 (KR)
(72) Inventor: Seoung, Il Kang, Kwangjin-Gu, Seoul 143-203 (KR)
(74) Representative: Allman, Peter John

(57) **Abstract**

This invention relates to a research method utilizing a computer communication, and more particularly to a research system which can acquire a variety of information necessary for formulation of a marketing strategy by questioning directly an end user through the use of a computer communication such as the Internet, as well as process the various information to sell the processed information to a user over a communication network. The research system comprises a subscriber management system, a questionnaire drawing system, a questionnaire reply system, a questionnaire analysis system, a data integration and analysis system, a data sale system, and a payment system. The research system further may comprise a prize offering system for holding a lottery to offer prizes (i.e., free bonus gifts) to the questionnaire respondents, to inform each questionnaire respondent of contents of a won prize, and to manage delivery of the won prize to each questionnaire respondent after conducting the questionnaire. According to the present invention, users can download research data at a real time so that media focus is possible, thereby converging immediately public opinion. In addition, research data colleted through previous questionnaire can be sold as a new model by processing them, thereby eliminating the inconvenience of having to carry out again research for the previously conducted questionnaire and inefficiency accordingly, and ensuring easily time series data which becomes a basis of marketing models. Furthermore, all the processes such as request of research, payment of an expense, identification of a result of the research, etc. can be performed through computer communication, thereby greatly reducing labor and time required for research.

## Description

### BACKGROUND OF THE INVENTION

### 1. Field of the Invention

The present invention relates to a research method utilizing a computer communication, and more particularly to a research system which can acquire a variety of information necessary for formulation of a marketing strategy by questioning directly an end user through the use of a computer communication such as the Internet, as well as process the various information to sell the processed information to a user over a communication network.

### 2. Description of the Related Art

In general, a great deal of companies conduct research on tastes of consumers, style of living, a degree of recognition for goods for the purpose of a marketing of goods, and research on a ranking and a degree of preference of popular songs and a response of a televiewer to a TV program in TV media, etc.

Such a questionnaire can be performed by means of various methods including a method in which a plurality of specified persons are determined as a panel, respectively and a response to a predetermined questionnaire is periodically provided by the panel, a method in which a person performing a questionnaire assembles questionnaire respondents at a certain place to perform a questionnaire, a method in which the questionnaire performing person goes directly door-to-door to perform a questionnaire, a method in which the questionnaire performing person uses a telephone for a questionnaire, and a method in which the questionnaire performing person utilizes a computer communication for a questionnaire.

However, in the above-mentioned questionnaire methods which have been executed until now, it takes a long time to collect contents of a response to the questionnaire and process the collected data so that it is impossible to immediately recognize a response or a degree of preference of a consumer and a televiewer when necessary.

More specifically, in the first one among the above questionnaire methods, i.e., the method in which a response to a predetermined questionnaire is periodically provided by the plurality of specified persons each determined as a panel, it takes a long time to collect response data according to the questionnaire and process the collected response data, as well as it is difficult to reflect a style of living or a taste of each panel varying with the lapse of a certain time to the enqute contents. Also, in the second and third ones among the above questionnaire methods, i.e., the method in which a questionnaire performing person assembles questionnaire respondents at a certain place for a questionnaire and the method in which the questionnaire performing person goes directly door-to-door to perform a questionnaire, it is very complicated to conduct a questionnaire and it also takes a long time to process the collected data.

Therefore, currently, there is a need for a rapid performance of a questionnaire in accordnace to a rapid change in a life mode of society so that use of the above three questionnaire methods is reduced gradually. Instead of these questionnaire methods, use of the questionnaire methods through a telephone and a computer communication is growing increasingly.

However, the questionnaire method utilizing a telephone has a disadvantage that a questionnaire performing person selects a telephone number randomly and makes a phone call to a consumer or a televiewer, which gives a questionnaire respondent to an unpleasant feeling. In further, the questionnaire method utilizing a telephone requires many people to conduct a questionnaire and the questionnaire cost increases accordingly, and it also takes a long time to collect data of a response to the questionnaire which each of the questionnaire conducting persons note and process the collected data.

Furthermore, in the questionnaire method utilizing a computer communication which is used currently, once any client requests a questionnaire to a specific research institution and pays expenses necessary for the questionnaire to it, the research company allows an on-line interviewer to connect with each questionnaire respondent to conduct a questionnaire by one to one, and collects contents of a response to the questionnaire and processes the collected data. As a result, the entire processes ranging from a request for a questionnaire to the acquirement of a result of the questionnaire also require much time and a great deal of cost.

### SUMMARY OF THE INVENTION

Therefore, the present invention has been made in view of the abovementioned problems, and it is an object of the present invention to provide a research method utilizing a computer communication, which allows a questionnaire to be conducted on various communication networks by a specific program while allowing contents of a response to the questionnaire to be collected and processed at a real time, thereby providing the processed questionnaire data to a questionnaire client.

It is another object of the invention to provide a research method utilizing a computer communication which allows previous accumulated questionnaire data to be integrated and processed to sell the processed data of a new model on a communication network, thereby acquiring necessary information from only data stored in the research system without conducting a new questionnaire again.

It is another object of the invention to provide a research method utilizing a computer communication which allows for a request of a questionnaire on a communication network while allowing payment by credit card to be approved, thereby providing contents of a response to the questionnaire collected on-line and processed data thereof to a questionnaire client.

According to an aspect of the present invention, there is provided a research method utilizing a computer communication, comprising the steps of:
a subscriber management step for storing a variety of inputted information on basic personal particulars and life style of a subscriber having access to a research system therein, to issue a user ID to the subscriber, and to manage the issued user ID; a questionnaire drawing step for enabling a questionnaire client to select an existing drawn questionnaire so as to use the existing drawn questionnaire as a basic information or to draw a new questionnaire in person if a subscriber having access to the subscriber management system is the questionnaire client; a questionnaire reply step for notifying a questionnaire respondent or a panel of a type of questionnaire according to information inputted upon registration of the questionnaire respondent to the subscriber management system and to receive a response to the type of questionnaire from the questionnaire respondent if the subscriber having access to the subscriber management system is the questionnaire respondent; a questionnaire analysis step for analyzing, at a real time, data of the received response to the type of questionnaire stored in the questionnaire reply system to provide the analyzed data to the questionnaire client; a data integration and analysis step for re-classifying, integrate, and re-analyze a variety of completed questionnaires notified by the questionnaire reply system according to a plurality of predefined categories to create a newly planned research data; a data sale step for selling the data analyzed previously in the questionnaire analysis system and the research data planned newly in the questionnaire integration and analysis system to a data buyer having access to the subscriber management system; and a payment step for enabling not only the questionnaire client to pay an expense claimed for the new questionnaire drawn by the questionnaire client in the questionnaire drawing system, but also the data buyer to pay an expense claimed for the selling of the data to the data buyer in the data sale system, by acquiring an approval of payment by credit card on a communication network.

The questionnaire reply step further comprises a step of allowing a prize offering system to hold a lottery to offer prizes (i.e., free bonus gifts) to the questionnaire respondents who have answered the type of questionnaire, to inform an associated one of the questionnaire respondents of contents of a won prize, and to manage delivery of the won prize to the associated one thereof at the time of completion of carrying out of the questionnaire. At this moment, the information of the contents of prizes to be won is performed prior to notification of the type of questionnaire to the questionnaire respondent in the questionnaire reply system.

The research system according to the present invention comprises a subscriber management system, a questionnaire drawing system, a questionnaire reply system, a questionnaire analysis system, a data integration and analysis system, a data sale system, and a payment system.

The subscriber management system is adapted to store inputted information on basic particulars and life styles including names, public network IDs, E-mail addresses, addresses of a residence, the dates of births, ages, and occupations of subscribers such as a questionnaire client, a questionnaire respondent and a data buyer, etc., who are newly registered to the research system, issue user IDs, and manage the issued user ID. All the inputted subscriber data is stored in a subscriber data base (DB), and each information on the subscriber undergoes modification every certain time of period, for example, six months in order to ensure that the information will have accuracy. Among subscribers registered to the subscriber DB, a subscriber which has a reliability to some extent through responding to a questionnaire is selected as a panel member so that information on the panel is stored in a panel data base (DB), and data stored in the panel DB is utilized as basic information upon analysis of data of a response to a questionnaire while being utilized as fundamental data in selection of a panel for a questionnaire at the time of conducting of research for a certain social stratum.

The questionnaire client herein refers to a person who requests research, and the data buyer refers to a person who purchases data processed by the research system of the present invention. In a case where the questionnaire client tries to draw up a questionnaire by inputting a keyword, but the questionnaire corresponding to the keyword had already been accomplished or the contents of an existing questionnaire had already been processed by a new model, since the questionnaire client purchases the newly processed data immediately, he may be called a data buyer.

The questionnaire drawing system is adapted to allow a questionnaire client having access to the subscriber management system to draw a questionnaire in person, in which expenditure required for the questionnaire is calculated depending on the prepared questionnaire to display the calculated expenditure table, and payment of the expenditure can be performed by a special system immediately. The questionnaire drawing system also determines whether or not there is an existing drawn questionnaire by sorting a classification system of the questionnaire, a keyword and a logic word, etc., upon drawing of the questionnaire, and allows the questionnaire client to utilize the existing drawn questionnaire, i.e., a previously conducted questionnaire as a basic information if there is an existing drawn questionnaire. Further, the questionnaire drawing system allows the questionnaire client to designate an object of a questionnaire, information on prizes, and the kind of data requested, etc. after preparing the questionnaire. At this moment, the inputted information on the questionnaire including contents of the questionnaire, the classification of the questionnaire, the type of a response to the questionnaire, a keyword, etc. is stored in a questionnaire DB.

The questionnaire reply system is adapted to notify a questionnaire respondent, i.e., a panel of an associated questionnaire involving summarized information for the classification system of the questionnaire. The notification of the associated questionnaire to the questionnaire respondent or the panel is accomplished through the transmission of E-mail, etc., and a response of the questionnaire respondent to the associated questionnaire also is carried out by the same method as the above notification method. Information on the questionnaire response, such as the number of a questionnaire, the number of a panel, etc., and data of the response thereof are stored in a response DB.

The questionnaire analysis system is adapted to analyze, at a real time, data of a response of the questionnaire respondent to the associated questionnaire prepared by the questionnaire client and to store the analyzed data in an analysis DB while providing the analyzed data to the questionnaire client through the Internet or an E-mail. At this time, the analyzed data may be displayed in a form of a graph by a certain program, or in a form of data for an Excel program or data for a Hangul program, etc. The analyzed data are transmitted to a data integration and analysis system, and a data sale system later.

The prize offering system is adapted to randomly select th number of the questionnaire respondents as many as the number of prizes through holding a lottery and to inform each of the selected questionnaire respondents of wining of the prize in the lottery through an E-mail or to output a list of the winners of the prize, followed by delivery of an associated prize to each of the selected questionnaire respondents, after carrying out of the questionnaire. At this time, information on a stock of the prizes, information on the prizes according to the questionnaire, and information on the winning of the prizes, etc. are stored in a prize DB.

The data integration and analysis system is adapted to re-classify the previously accomplished questionnaires based on a new model, to extract a necessary questionnaire from the re-classified questionnaires to create a planned research data, and to transfer the created data to a data sale system.

The data sale system is adapted to display data of the questionnaire analysis system and data of the questionnaire integration and analysis system, etc., in a saleable form, and to automatically calculate and display an expense required for purchase of data selected by a data buyer while providing the selected data to the data buyer along with completion of payment of the expense by a fixed payment system. At this point, sold data may be provided in a form of analysis completed data, SPSS, an Excel data, and a graph.

The payment system is adapted to allow the data buyer to acquire approval of payment by a credit card by means of credit information on-line to pay the data purchasing expense. At this time, the payment system not only may issue a bill according to purchase of data, but also output a list of data requested for delivery. Further, it is preferable tat the payment system creates all the sale information so as to understand the present state of all sales. These information on sale by a credit card and the bill are stored in a sale DB.

### BRIEF DESCRIPTION OF THE DRAWINGS

The foregoing and other objects, features and advantages of the present invention will become more apparent from the following detailed description when taken in conjunction with the accompanying drawings in which:
Fig. 1 is a schematic block diagram illustrating the configuration of a system for implementing a research method according to an embodiment of the present invention;
Fig. 2 is a schematic view illustrating a plurality of constitutional elements each, i.e., a plurality of systems having a function necessary for implementation of a research method according to a preferred embodiment of the present invention;
Fig. 3 is a flowchart illustrating a control routine of a subscriber management process to be executed by the subscriber management system in an embodiment of the present invention;
Figs. 4a and 4b are flowcharts illustrating a control routine of a questionnaire drawing process to be executed by the questionnaire drawing system in an embodiment of the present invention;
Fig. 5 is a flowchart illustrating a control routine of a questionnaire reply process to be executed by the questionnaire reply system in the embodiment of the present invention;
Fig. 6a is a flowchart illustrating a control routine of an on-line questionnaire analysis process to be executed by the analysis system in the embodiment of the present invention;
Fig. 6b is a flowchart illustrating a control routine of an off-line questionnaire analysis process to be executed by the analysis system in the embodiment of the present invention;
Fig. 7 is a flowchart illustrating a control routine of an on-line data statistical analysis process to be executed by the analysis system in the embodiment of the present invention;
Fig. 8a is a flowchart illustrating a control routine of a simple questionnaire data sale process to be executed by the data sale system in the embodiment of the present invention;
Fig. 8b is a flowchart illustrating a control routine of a complex questionnaire data sale process to be executed by the data sale system in the embodiment of the present invention; and
Fig. 9 is a flowchart illustrating a control routine of a payment process to be executed by the payment system in the embodiment of the present invention.

### DETAILED DESCRIPTION OF THE PREFERRED EMBODIMENT

Reference will now be made in detail to the preferred embodiments of the present invention.

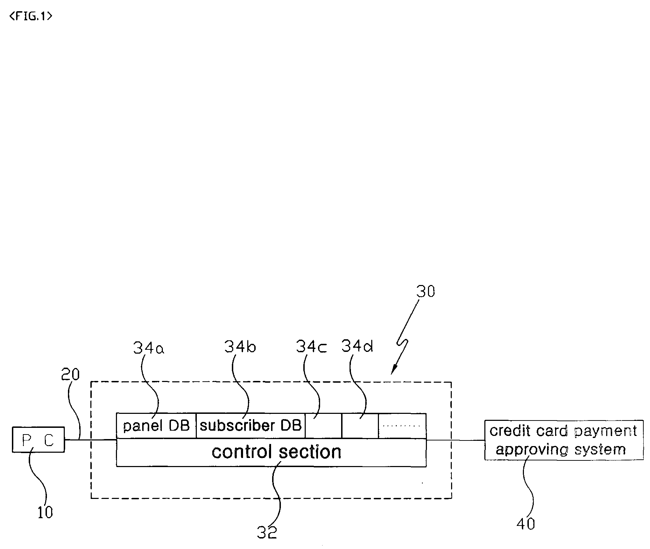

Fig. 1 is a schematic block diagram illustrating the configuration of a system for implementing a research method according to an embodiment of the present invention.

Referring to Fig. 1, there is shown a research system 30 of the present invention, a PC, and a credit card payment approving system 40. The research system comprises a subscriber management system, a questionnaire drawing system, a questionnaire reply system, a questionnaire analysis system, a data integration and analysis system, a data sale system, and a payment system.

Everyone can have access to the research system 30 of the present invention directly, or through a variety of public networks 20 including a national communication network such as Chollian or Hitel, or Internet, by using a personal computer (PC). After a subscriber inputs information on himself and is issued an ID, he can request a questionnaire, respond to the questionnaire, and purchase data of a response to the questionnaire according to control and instruction of a control section 32 of the research system 30 driven by a certain program. In Fig. 1, Reference numerals 34a, 34b, 34c, 34d,... designate various data bases (DBs), and reference numeral 40 designates a credit card payment approving system operated by a credit card company.

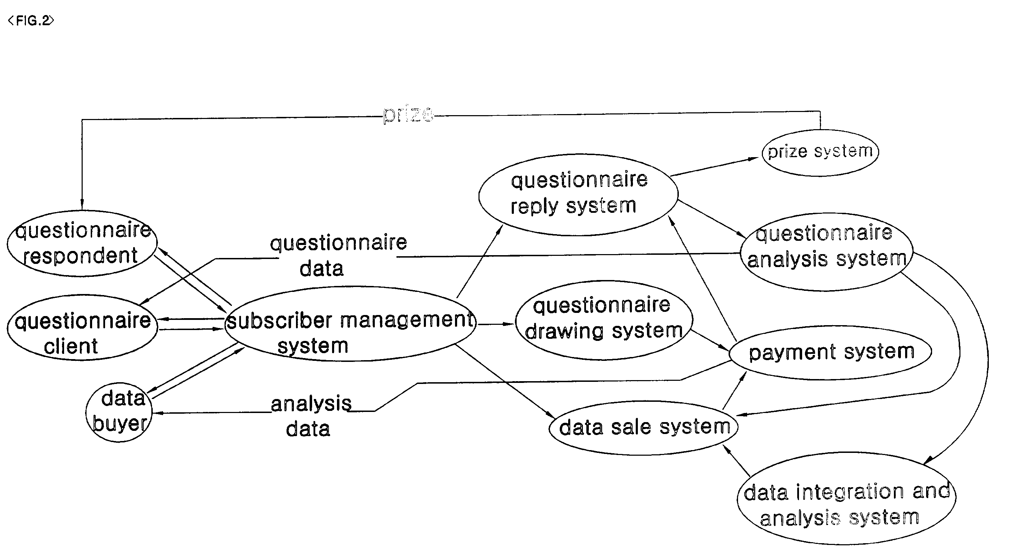

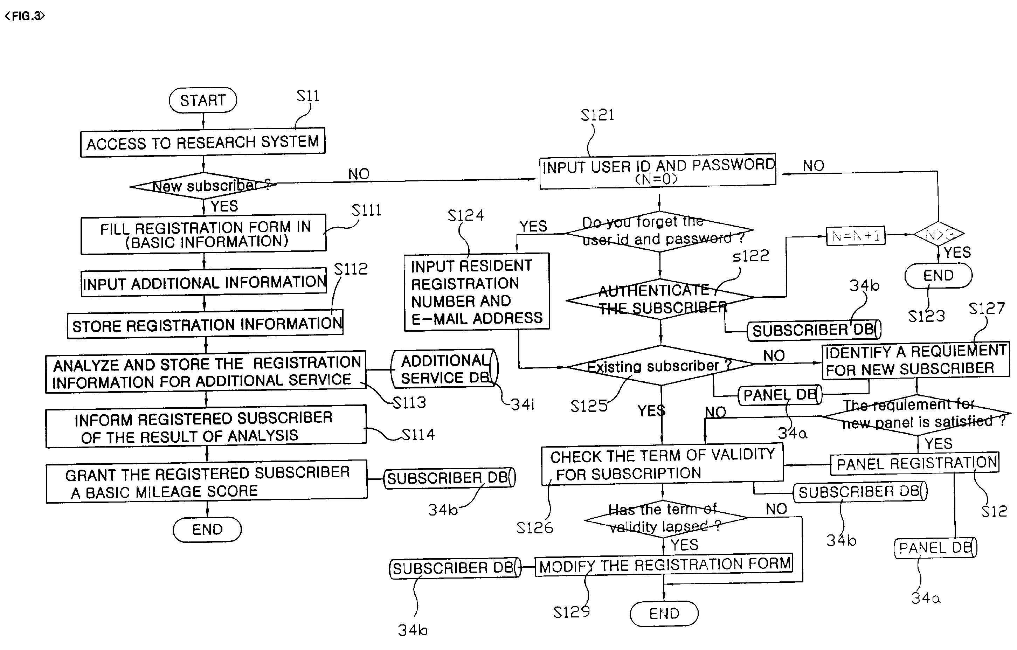

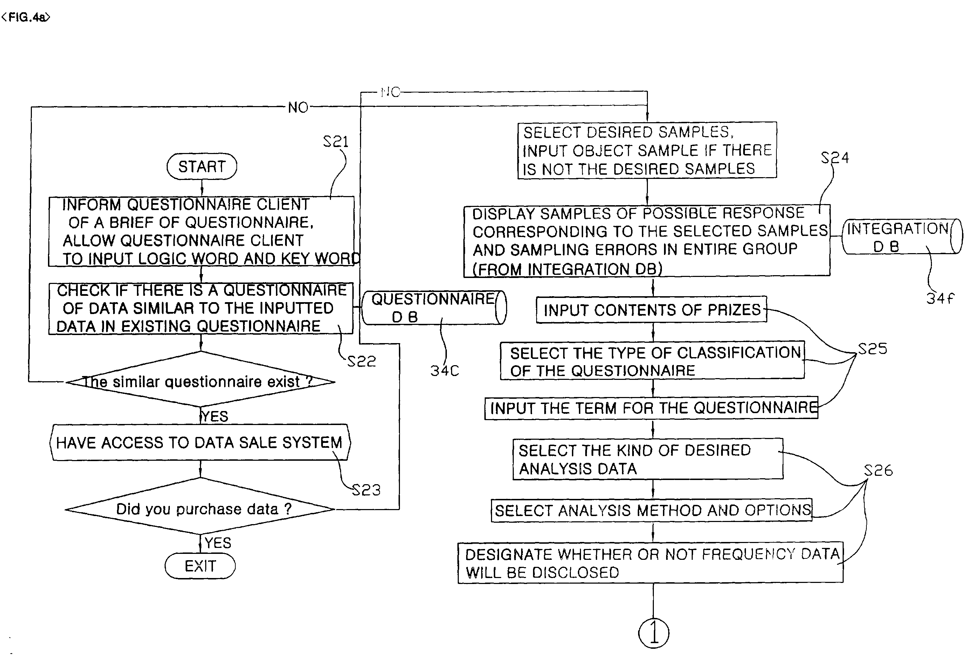

Fig. 2 is a schematic view illustrating an interrelation between a plurality of constitutional elements, i.e., a plurality of systems each having a function necessary for implementation of a research method according to a preferred embodiment of the present invention, in which a subscriber has access to a subscriber management system, and a series of sequential research processes including an input of information on the subscriber, an issue of user ID, a drawing of a questionnaire, a notification of a questionnaire, and a response of the questionnaire, as well as a holding of a lottery for offering prizes, an analysis of data of the response, an integration and re-analysis of the data, a sale of the data, and a payment of expenses, accordingly, are shown in a diagram form to easily understand the research method of the present invention. The research process according to an embodiment of the present invention shown in Fig. 2 will be described in detail hereinafter with reference to Figs. 3 to 9 illustrating concretely an operation of each system of Fig. 2.

Fig. 3 is a flowchart illustrating a control routine of a subscriber management process to be executed by the subscriber management system in an embodiment of the present invention.

Referring to Fig. 3, there is shown a subscriber management system operating when a questionnaire client, a questionnaire respondent, or a data buyer has access thereto. When anyone has access to the research system 30 through the public network 20 by using the personal computer (PC) 10 (Fig.1), the subscriber management system is immediately operated.

Firstly, when a subscriber has access to the subscriber management system through the research system 30 (S11), a control section 32 determines whether or not the subscriber is a new subscriber. If the answer is YES, that is, if it is determined that the subscriber is a new subscriber, the subscriber management system draws a registration form of the new subscriber (S111). Personal particulars inputted in the registration form of the subscriber having access to the subscriber management system include not only basic information such as an address, a name, a public network ID, an E-mail address, a gender, a resident registration number, and an occupation, etc., of the subscriber, also an additional information for recognizing a life style of the subscriber. When such a variety of information is inputted, the registered information is stored in a subscriber DB 34 of the research system 30 shown in Fig. 1 (S112) while a result of analysis of the registered information is stored in an additional service DB thereof (S113). Then, the registered subscriber is selectively informed of the result of analysis immediately (S114). As a result, the registered subscriber is granted a basic mileage score, and simultaneously, information on the basic mileage score is stored in a subscriber DB 34b of the research system 30 shown in Fig. 1. After that, the subscriber management system is selectively connected to a questionnaire drawing system, a questionnaire reply system, or a data sale system depending on the type of the subscriber. Meanwhile, in the above step where the control section 32 determines whether or not the subscriber is a new subscriber, if the answer is NO, that is, If it is determined that the subscriber is an existing subscriber, the subscriber management system allows the existing subscriber to input a user ID and a password of himself (S121), and identifies the inputted user ID and password from the subscriber DB 34b (S122). If the inputted user ID and password are wrong, the subscriber management system allows the existing subscriber to input again the user ID and password of himself At this time, if the again inputted user ID and password are wrong more than three times, the control routine of the subscriber management system is concluded (S123), or the program returns to the first access step.

In a case where the subscriber forgets the user ID and the password of himself, the subscriber management system may allow the subscriber to input a resident registration number and an E-mail address of himself therein, instead of the user ID and the password, to identify' if the subscriber is an existing subscriber or panel (S124).

After the subscriber is subjected to authentication through the step (S124), the program proceeds to step S125 in which the control section 32 determines whether or not the subscriber which has inputted the resident registration number and the E-mail address is the existing subscriber or panel, through a panel DB 34a. If it is determined at step S125 that the subscriber is the existing subscriber, the program proceeds to step S126 where the control section 32 checks the term of validity for subscription from the subscriber DB 34b. Then, if the term of validity of the subscriber or panel expired, for example, six months has lapsed, the subscriber management system allows the subscriber to modify the registration form of the subscriber in the subscriber DB 34b (S129). Thus, the control routine of the subscriber management system is concluded.

If, on the other hand, it is determined at step S125 that the subscriber is not the existing subscriber, the program proceeds to step S127 where the control section 32 identifies a requirement for a new panel. If the subscriber satisfies the new panel requirement, the subscriber is registered as a new panel in the panel DB 34a (S128), and the program proceeds to step S126. Subsequently, the above steps 126 and 129 are performed.

After the operation of the subscriber management system is ended, the panel has access to the questionnaire drawing system, the questionnaire reply system, or the data sale system, selectively, depending on a condition of the subscriber or panel.

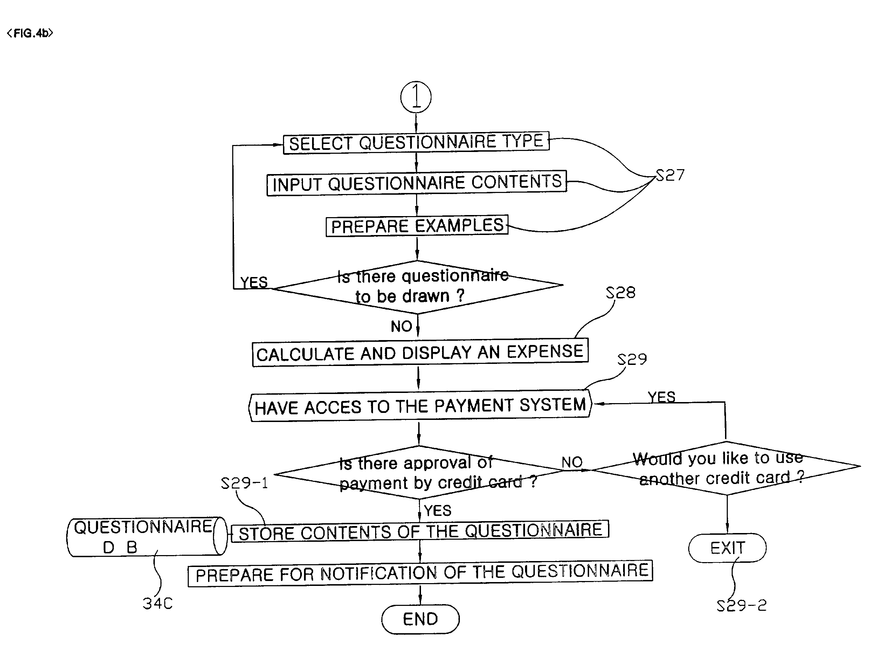

Figs. 4a and 4b are flowcharts illustrating control routines of questionnaire drawing processes to be executed by the questionnaire drawing system in an embodiment of the present invention.

When a questionnaire client has access to the research system 30, he is connected to the questionnaire drawing system through the subscriber management system. The questionnaire drawing system informs the questionnaire client of a summary of the questionnaire, i.e., the main point of drawing the questionnaire and an expense claimed for a drawing of the questionnaire, etc., and allows the questionnaire client to input a logic word, a key word (S21) to determine whether or not there is a questionnaire of data similar to the inputted data through a questionnaire DB 34c (S22). If it is determined at step S22 that there is a similar questionnaire in existing questionnaires, the questionnaire client in turn has access to the data sale system (S23).

If the questionnaire client does not purchase the similar questionnaire, the questionnaire drawing system allows the questionnaire client to draw a new enqeute as in a case where there is not a similar questionnaire in the existing questionnaires. At this point, the questionnaire drawing system allows the questionnaire client to select desired questionnaire samples from questionnaire samples inputted previously. Then, as long as there is not an associated questionnaire in the desired questionnaire sample, the questionnaire drawing system allows the questionnaire client to input new questionnaire data in person, and to fetch questionnaire samples of possible response corresponding to the selected questionnaire samples and sampling errors in an entire group from integration DB 34f to display them (S24). At this point, instead of selecting the desired questionnaire samples from questionnaire samples inputted previously, the questionnaire drawing system allows the questionnaire client to input data of an object questionnaire sample immediately. Then, the questionnaire drawing system allows the questionnaire client to select or input several particular items of information including, contents of prizes to be offered by holding a lottery for questionnaire respondents, the number of questionnaire samples, the type of classification of the questionnaire, the term for the questionnaire, etc. (S25). After that, the questionnaire drawing system allows the questionnaire client to display and select a kind of analysis data, analysis method and a variety of options while allowing the questionnaire client to designate whether or not frequency data will be disclosed (S26). The questionnaire drawing system allows the questionnaire client to select or input multi/general questionnaire type, contents of the questionnaire, examples, etc. (S27). If there is another questionnaire to be inputted, the questionnaire drawing system allows the questionnaire client to input again therein. After the drawing of the questionnaire has been completed, the questionnaire drawing system calculates and displays an expense according to the drawing of the questionnaire from a previously inputted cost table (S28). At subsequent step S29, the research system 30 allows the questionnaire client to have access to the payment system in which as long as there is approval of payment by a credit card, contents of the questionnaire are stored in questionnaire DB 34c (S29-1) followed by preparation for notification of the questionnaire.

On the other hand, if there is not approval of payment by a credit card, the payment system identifies whether the questionnaire client wants to use another credit card to again seek approval of payment by a credit card. If any credit card for payment is not approved, the questionnaire contents are not stored and the program is ended immediately (S29-2).

Such a questionnaire drawing operation may further comprise a step of identifying and modifying the contents of a questionnaire.

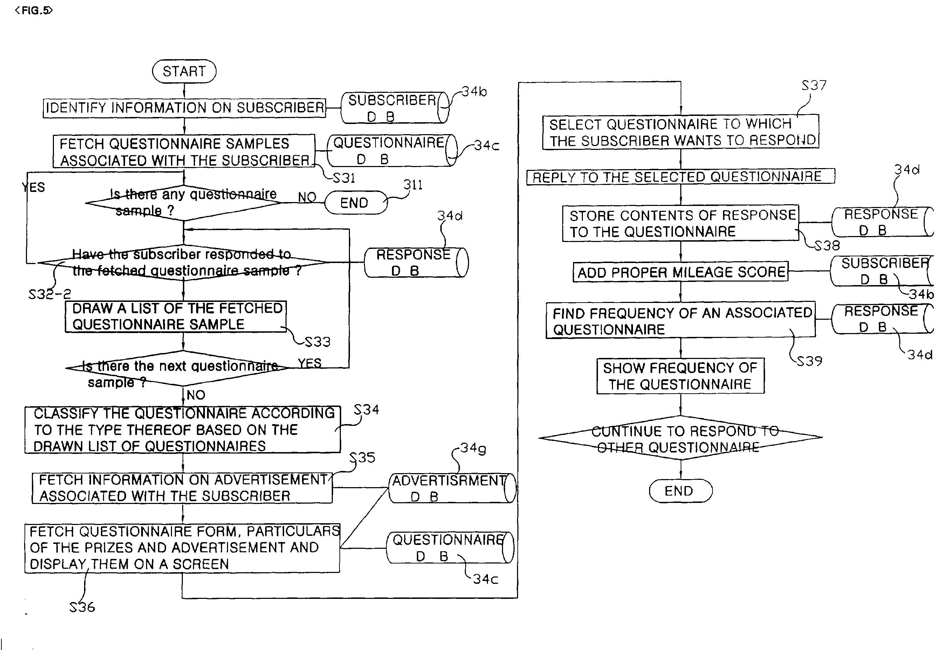

Fig. 5 is a flowchart illustrating a control routine of a questionnaire reply process to be executed by the questionnaire reply system in the embodiment of the present invention.

Referring to Fig. 5, when a questionnaire respondent has access to the research system 30, he is connected to the questionnaire reply system through the subscriber management system.

First, when a subscriber or a questionnaire respondent has access to the questionnaire reply system, the questionnaire reply system identifies information on the subscriber through the subscriber DB 34b, and fetches questionnaire samples associated with the subscriber from the subscriber DB 34c according to the identified data to notify the subscriber of the questionnaire samples (S31). The questionnaire reply system identifies the term for the questionnaire, objects of the questionnaire and whether or not the questionnaire respondent has replied to the questionnaire samples, etc., to extract questionnaire samples to be notified, and notifies the questionnaire respondent of the extracted questionnaire samples along with information on prizes.

At this time, only questionnaire corresponding to a sample can be displayed. If there is not any questionnaire sample to be notified, the control section 32 stops the operation of the questionnaire reply system to conclude the program (S311). On the other hand, if there is some questionnaire sample to be notified, the program proceeds to step S32-2 where it is determined whether or not the subscriber has responded to the fetched questionnaire samples through the response DB 34d. If it is determined at step S32-2 that the subscriber has not responded to the fetched questionnaire samples, the questionnaire reply system draws a list of the fetched questionnaire samples to which the subscriber has not responded (S33). Subsequently, the control section 32 identifies whether or not there is the next questionnaire sample. If there is not the next questionnaire sample, the questionnaire reply system classifies the questionnaires according to the type thereof based on the drawn list of the questionnaire samples, fetches information on advertisement associated with the subscriber from an advertisement DB 34g and information on a form of a questionnaire and particulars of the prizes from the questionnaire DB 34c to show them (S35,S36). Then, the subscriber or the questionnaire respondent selects a questionnaire to which he wants to respond, replies to the selected questionnaire, and contents of a response to the questionnaire are stored in the reply DB 34d immediately (S38).

Once such a reply to the selected questionnaire is completed, the questionnaire reply system calculates selectively a proper mileage score for the reply thereto, adds the calculated mileage score to existing acquired mileage scores, and records and stores the finally acquired mileage scores in the subscriber DB 34b. Subsequently, after the questionnaire reply system finds and shows a frequency of an associated questionnaire, it allows the subscriber to continue to respond to other questionnaires. At this time, if the questionnaire respondent as the subscriber stops responding to the questionnaires, the control routine of the questionnaire reply system is concluded.

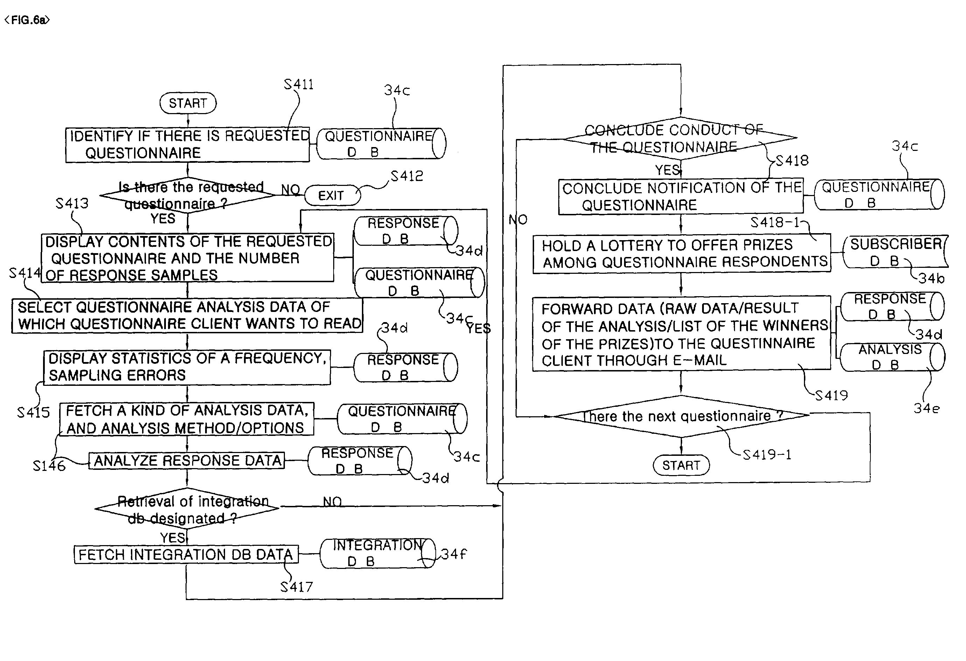

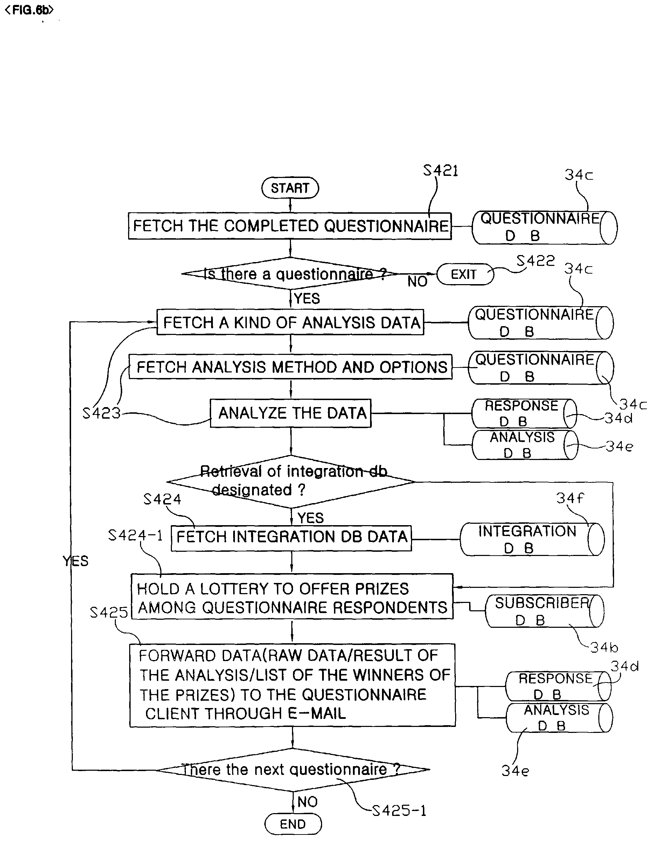

Figs. 6a and 6b are flowcharts illustrating control routines of a questionnaire analysis step to be executed by the questionnaire analysis system in the embodiment of the present invention, wherein

Fig. 6a is a flowchart illustrating a control routine of an on-line questionnaire analysis process and Fig. 6b is a flowchart illustrating a control routine of an off-line questionnaire analysis process.

Referring to Fig. 6a, a questionnaire client has access to the questionnaire analysis system, the control section 32 of the research system 30 determines whether or not there is a requested questionnaire from the questionnaire DB (S413). If it is determined that there is not the requested questionnaire, the program proceeds to step S412 where the control routine of the questionnaire analysis system is concluded. Thus, analysis data is showed to only the questionnaire client.

If, on the other hand, it is determined that there is the requested questionnaire, the program proceeds to step S413 where the questionnaire analysis system fetches contents of the requested questionnaire and the number of response samples from the response DB 34d and the questionnaire DB 34c to display them. At subsequent step S414, if the questionnaire client selects a questionnaire analysis data of which the questionnaire client wants to read, the program proceeds to step S415 where the questionnaire analysis system fetches statistics of a frequency, sampling errors, etc., from the response DB 34d to display them while fetching a kind of analysis data and analysis method/option, etc., from the questionnaire DB 34c to analyze response data of the response DB 34d (S416). Subsequently, after the questionnaire analysis system fetches integration DB data from the integration DB 34f depending on whether or not retrieval of integration DB has been designated to display them (S417), the program proceeds to step S418 where it is determined whether or not conducting of the questionnaire is ended.

If it is determined at step S418 that the questionnaire client does not conclude conduct of the questionnaire, the program proceeds to step S419-1 where it is determined whether or not there is the next questionnaire. If it is determined at step 419-1 that there is the next questionnaire, the program returns to step S413 where the subsequent steps are performed again. On the other hand, if it is determined at step S418 that the questionnaire client conclude conducting of the questionnaire, notification of the questionnaire is concluded and contents of the questionnaire are stored in the questionnaire DB. Subsequently, after the questionnaire client has access to a prize system which holds a lottery to offer prizes to questionnaire respondents (S418-1), and the prize system fetches data from the response DB 34d and the analysis DB 34e to forward raw response data, a result of the analysis, a list of the winners of the prizes, etc. to the questionnaire client through E-mail (S419). At subsequent step S419-1, the control section checks if there is the next questionnaire. Accordingly, research data can be provided to the questionnaire client, at a real time, by utilizing a communication.

The questionnaire analysis system can be configured so that the questionnaire client selects data which he wants to receive.

In Fig. 6b, the off- line questionnaire analysis system fetches the completed questionnaire from the questionnaire DB34c (S421), and the program proceeds to the subsequent step where it is determined whether or not there is a questionnaire. If it is determined that there is not any questionnaire, the program is concluded (S422). If, on the other hand, it is determined that there is a questionnaire, the program proceeds to step S423 where the off-line questionnaire analysis system fetches a kind of analysis data, and analysis method and options from the questionnaire DB 34c, and analyzes the data from the response DB 34d to store contents of the data in the analysis DB 34e. Subsequently, the questionnaire analysis system fetches integration DB data from the integration DB 34f depending on whether or not retrieval of integration DB has been designated to display them (S424), and the questionnaire client has access to a prize system which holds a lottery to offer prizes to questionnaire respondents (S24-1), and the prize system fetches data from the response DB 34d and the analysis DB 34e to forward raw response data, a result of the analysis, a list of the winners of the prizes, etc. to the questionnaire client through E-mail (S425). At subsequent step S425-1, the control section checks if there is the next questionnaire. If it is determined at step 425-1 that there is the next questionnaire, the program returns to step S423 where the subsequent steps are performed again. On the other hand, if it is determined at step S425-1 that there is not the next questionnaire, the control routine of the analysis system is concluded.

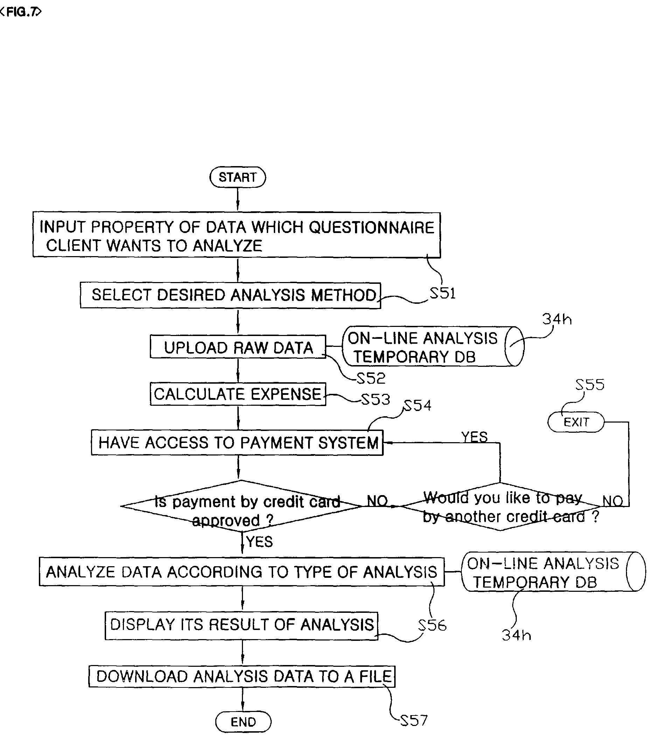

Fig. 7 is a flowchart illustrating a control routine for statistical analysis service of an on-line data statistical analysis system to be executed in the embodiment of the present invention.

As shown in Fig. 7, if a questionnaire client inputs property of data which he wants to analyze and selects a desired analysis method (S51), the data statistical analysis system uploads raw data from an on-line analysis temporary DB 34h (S52), calculates an expense to display it (S53), and allows the questionnaire client to have access to the payment system (S54) where it is determined whether or not payment by a credit card is approved. If payment by a credit card is approved in the payment system, the payment system fetches data from the on-line analysis temporary DB 34h, analyzes the fetched data according to a type of analysis to display its result of analysis (S56) while downloading the analysis data (S57).

If payment by a credit card is not approved from a credit card company, the payment system allows a subscriber to acquire approval of payment by a credit card depending on whether or not another credit card is used. If the subscriber does not pay by another credit card, the control routine of the analysis system is concluded (S55).

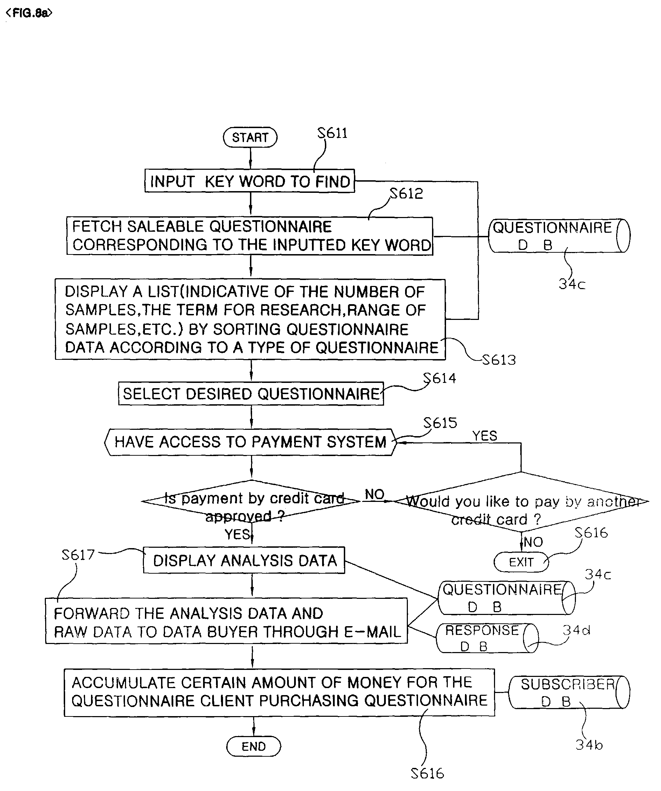

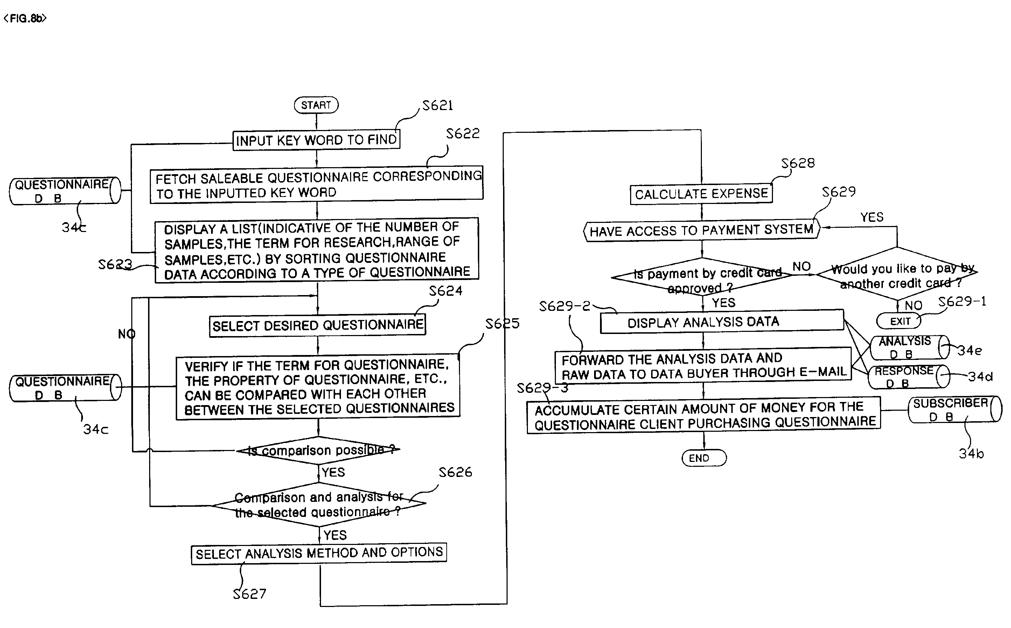

Fig. 8a is a flowchart illustrating a control routine of a simple questionnaire data sale process to be executed by the data sale system in the embodiment of the present invention.

Referring to Fig. 8a, when a questionnaire client (or a data buyer) inputs a key word to find (S611), the questionnaire data sale system fetches a saleable questionnaire corresponding to the inputted key word from the questionnaire DB 34c (S612) while displaying a list indicative of the number of samples, the term for research, a range of samples, etc. by sorting questionnaire data according to a type of questionnaire (S613). Then, when the data buyer selects a questionnaire which he wants to purchase (S614), an expense according to selection of the questionnaire is calculated and displayed while the data buyer has access to the payment system (S615) where it is determined whether or not payment by a credit card is approved. If payment by a credit card is approved in the payment system, the data sale system fetches analysis data from the questionnaire DB34c and the response DB 34d to display them as well as forwards the analysis data and raw data to the data buyer through E-mail (S617). At subsequent step S618, after the payment system accumulates a certain amount of money for the data buyer or the questionnaire client purchasing a questionnaire and records the accumulated amount of money in the subscriber DB34b, the control routine of the data sale system is concluded. This accumulated amount of money may be used in such a fashion that prizes is provided to the questionnaire client or the benefit of discount is granted to the questionnaire client upon conducting of the next research.

Fig. 8b is a flowchart illustrating a control routine of a complex questionnaire data sale process to be executed by the data sale system in the embodiment of the present invention.

Referring to Fig. 8b, the control routine of a complex questionnaire data sale system is similar to the control routine of the simple questionnaire data sale system in Fig. 8a.

When a questionnaire client (or a data buyer) inputs a key word to find (S621), the questionnaire data sale system fetches a saleable questionnaire corresponding to the inputted key word from the questionnaire DB 34c (S62) while displaying a list indicative of the number of samples, the term for research, a range of samples, etc. by sorting questionnaire data according to a type of questionnaire (S623). Then, when the data buyer selects a questionnaire which he wants to purchase (S62), the control section 32 verifies if the questionnaires selected from the questionnaire DB34c can be compared with each other in view of their term lengths, properties, etc.,(S625). If it is determined that the comparison of between the selected questionnaires is not possible, the program returns to the previous step S623 where the subsequent steps are performed. On the other hand, if it is determined that the comparison between the selected questionnaires is possible, the program proceeds to the step S623 where it is determined whether or not the selected questionnaires are compared and analyzed. If it is determined whether or not the selected questionnaires are compared and analyzed, the complex questionnaire data sale system allows the questionnaire client (or the data buyer) to select analysis methods and an option for each analysis method (S627), and calculates an expense accordingly to display the calculated expense(S628). At this time, the data buyer has access to the payment system (S629) where it is determined whether or not payment by a credit card is approved. If payment by a credit card is approved in the payment system, the data sale system fetches analysis data from the analysis DB34e and the response DB 34d to display them as well as forwards the analysis data and raw data to the data buyer through E-mail (S629-2). At subsequent step S629-3, after the payment system accumulates a certain amount of money for the data buyer or the questionnaire client purchasing a questionnaire and records the accumulated amount of money in the subscriber DB34b, the control routine of the data sale system is concluded.

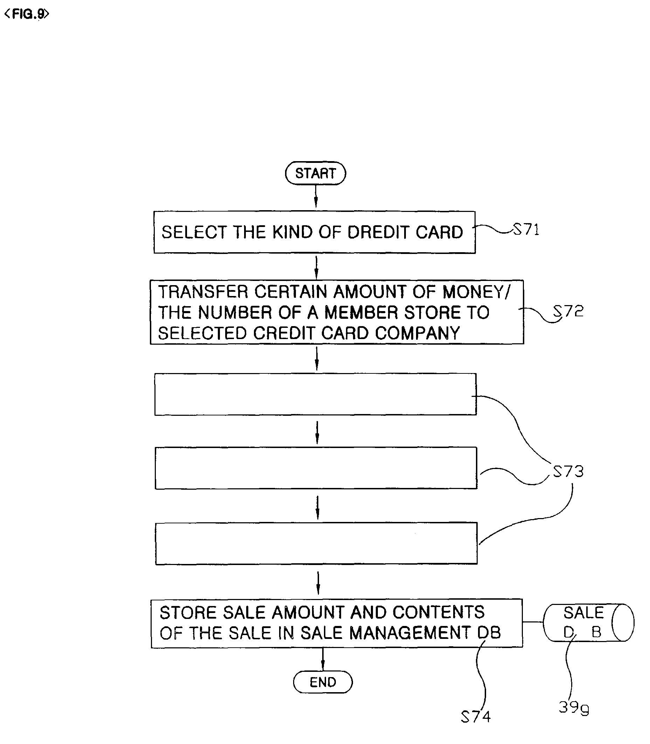

Fig. 9 is a flowchart illustrating a control routine of a expense payment process to be executed by the payment process system in the embodiment of the present invention.

Referring to Fig. 9, when a questionnaire client (or a data buyer) has access to the payment system in the research system 30, the payment system displays the kind of credit cards and allows the questionnaire client or the data buyer to select a certain credit card to be used (S71). Then, a certain amount of money/the number of member stores is transferred to a credit card company handling the selected credit card (S72). Subsequently, payment by a credit card is approved through predefined processes (S73) in each credit card company. When its results are transferred to the research system 30 from the credit card company again, total sale amount of money and contents of the sale are stored in a sale DB 34j (S74) while a bill is issued selectively. After that, access to each of the previous systems is performed.

As can be seen from the foregoing, in accordance with the research method by utilizing a computer communication of the present invention, all processes necessary for research including subscription to the research system, registration of panels, drawing of questionnaire, response to questionnaire, analysis of response data, calculation of an expense, holding of a lottery to offer prizes, integration analysis of data, provision of data analysis, provision of the prizes, etc. can be performed on-line, thereby giving convenience to users upon conducting of research.

Further, in accordance to the research system by utilizing a computer communication of the present invention, users can download research data at a real time so that media focus is possible, thereby converging immediately public opinion.

In addition, research data colleted through previous questionnaire can be sold as a new model by processing them, thereby eliminating the inconvenience of having to carry out again research for the previously conducted questionnaire and inefficiency accordingly, and ensuring easily time series data which become a basis of marketing models.

Furthermore, all the processes such as request of research, payment of an expense, identification of a result of the research, etc. can be performed through computer communication, thereby greatly reducing labor and time required for research.

While this invention has been described in connection with what is presently considered to be the most practical and preferred embodiment, it is to be understood that the invention is not limited to the disclosed embodiment, but, on the contrary, it is intended to cover various modifications within the spirit and scope of the appended claims.

## Claims

1. A research method utilizing a computer communication, comprising the steps of:
a subscriber management step for storing a variety of inputted information on basic personal particulars and life style of a subscriber having access to a research system therein, to issue a user ID to the subscriber, and to manage the issued user ID;
a questionnaire drawing step for enabling a questionnaire client to select an existing drawn questionnaire so as to use the existing drawn questionnaire as a basic information or to draw a new questionnaire in person if a subscriber having access to the subscriber management system is the questionnaire client;
a questionnaire reply step for notifying a questionnaire respondent or a panel of a type of questionnaire according to information inputted upon registration of the questionnaire respondent to the subscriber management system and to receive a response to the type of questionnaire from the questionnaire respondent if the subscriber having access to the subscriber management system is the questionnaire respondent;
a questionnaire analysis step for analyzing, at a real time, data of the received response to the type of questionnaire stored in the questionnaire reply system to provide the analyzed data to the questionnaire client;
a data integration and analysis step for re-classifying, integrate, and re-analyze a variety of completed questionnaires notified by the questionnaire reply system according to a plurality of predefined categories to create a newly planned research data;
a data sale step for selling the data analyzed previously in the questionnaire analysis system and the research data planned newly in the questionnaire integration and analysis system to a data buyer having access to the subscriber management system; and
a payment step for enabling not only the questionnaire client to pay an expense claimed for the new questionnaire drawn by the questionnaire client in the questionnaire drawing system, but also the data buyer to pay an expense claimed for the selling of the data to the data buyer in the data sale system, by acquiring an approval of payment by credit card on a communication network.

2. The research method according to claim 1, wherein in the subscriber management step, the term of validity for subscription of the subscriber having access thereto is fixed, the subscriber modifies information in the registration form of the subscriber if a certain period of time has lapsed.

3. The research method according to claim 1, wherein in the questionnaire reply step, the notification of the type of questionnaire to the questionnaire respondent or the panel and the response to the type of questionnaire therefrom are performed by E-mail.

4. The research method according to claim 1, wherein in the data integration and analysis step, a variety of completed questionnaires notified by the questionnaire reply system are re-classified and integrated according to a plurality of predefined categories based on a new model, and data of response to the re-classified and integrated questionnaires is re-analyzed fro application to the data sale system.

5. The research method according to claim 1, wherein in the data sale step, existing analyzed data having access to the subscriber management system is sold to the data buyer if contents of the questionnaire drawn newly by the questionnaire client are identical to those of response data processed by the questionnaire analysis system and those of the research data planned newly by the data integration and analysis system.

6. The research method according to claim 1, wherein the questionnaire reply step further comprises a prize offering step for holding a lottery to offer prizes to each of the questionnaire respondents or panels who have answered the type of questionnaire, for informing an associated one of the questionnaire respondents of contents of a won prize, and for managing delivery of the won prize to the associated one thereof at the time of completion of carrying out of the questionnaire.

7. The research method according to claim 6, wherein in the questionnaire reply step, the information of the contents of prizes according to a response to the questionnaire is performed prior to notification of the type of questionnaire to the questionnaire respondent in the questionnaire reply system.
